# EUROPEAN PATENT APPLICATION

(11) **EP 2 042 377 A2**
(43) Date of publication of application: **01.04.2009**
(21) Application number: 08380275.1
(22) Date of filing: 24.09.2008
(51) Int. Cl.: B60R 11/02

(54) **Universal support for the assembly of GPS navigators in automobiles**

(30) Priority: 28.09.2007 ES 200701976 U
(71) Applicant: Seat, S.A., 08760 Martorell, Barcelona (ES)
(72) Inventor: Marina Lorente, Lourdes, 08760 Martorell - Barcelona (ES); Martos Ortega, Antonio, 08760 Martorell - Barcelona (ES); Escriba Murciano, Jordi, 08760 Martorell - Barcelona (ES)
(74) Representative: Carvajal y Urquijo, Isabel

(57) **Abstract**

The invention relates to a universal support for the assembly of GPS navigators in automobiles comprising a tubular foot (1) coupled in an opening die cut in the dashboard of the automobile, and a removable head (2) coupled in the upper base of the tubular foot and bearing means for fixing an anchor piece (3) of the navigator in the operative position. The head (2) comprises a receptacle provided with anchoring means for anchoring to the tubular foot, with partial freedom of rotation about the shaft of said foot, and incorporates a pivoting flap (10), which pivots according to a shaft (11) perpendicular to that of said receptacle, pivoting between a collapsed position, in which it is in coplanar position with the base of said receptacle, and an operative position, in which it forms an angle with said base that is slightly greater than 90°.

## Description

### Campo of the Invention

The present invention relates to a universal support for the assembly of GPS navigators in automobiles which allows integrating in the vehicle different types of navigators regardless of the manufacturer thereof.

### State of the Art

The use of GPS navigators is increasingly more frequent in automotive vehicles. There are several solutions for installing this type of navigator in automobiles.

One of the solutions is to integrate the navigator upon acquiring the vehicle, using the navigator offered by the automobile manufacturer, which does not always have the suitable features, its cost is usually high and the reading and view thereof can be compromised by design factors, which are not usually the most correct, complicating the task of viewing the map.

Another solution is to purchase a portable navigator of any manufacturer on the market and to try to integrate it in the automobile. This solution has in its favor its lower cost compared to conventional navigators and its versatility. It further allows the user to be able to choose which type of navigator he or she wishes to purchase without having to be limited to what is established by the vehicle manufacturer, having in many cases features that are much better than conventional navigators. In contrast, these navigators have a geometry that may bother the user of the vehicle and may compromise his or her safety. Portable navigators are usually fixed by means of adhering one or several suction cups to the windshield of the vehicle. Since it is a complementary instrument of the vehicle, it requires an external power source once the battery runs out. This power is produced by means of an adapter connected to the socket of the vehicle, located in the cavity for the lighter. These wires may bother the user of the vehicle and may compromise his or her safety during the trip.

### Description of the Invention

The object of the present invention is to solve the drawbacks described above by means of a portable navigator which allows maintaining the versatility and features of portable navigators, with the capacity of integration of conventional navigators, and allowing doing away with the bothersome wires for external power supply. The navigator of the invention is designed to be inserted in a hole that is die cut for such purpose in the dashboard of the vehicle, such that it allows the coupling of different navigator models and is virtually concealed when the navigator is removed.

The support of the invention comprises a tubular foot that is intended to be coupled in an opening die cut in the dashboard of the automobile. A removable head is assembled in this tubular foot, which head is coupled in the upper base of the tubular foot and bears means for fixing an anchor piece of the navigator in the operative position.

The head consists of a receptacle that is assembled in the tubular foot in the inverted position and is provided with anchoring means for anchoring to the tubular foot with partial freedom of rotation about the shaft of said foot. The receptacle bears a flap which can pivot according to a shaft perpendicular to that of the receptacle between a collapsed position, in which it is in coplanar position with the base of said receptacle, and an operative position, in which it forms an angle with said base that is slightly greater than 90°. The back of this flap bears means for fixing the anchor piece of the navigator.

Both the receptacle and the tubular foot have passages for the connection means of the navigator.

The anchor piece of the navigator will be different for each navigator model, but the means for fixing said piece to the flap being maintained.

As previously indicated, the tubular foot is introduced in the hole made in the dashboard of the vehicle, where it is adjusted and locked by means of a conventional clamping system.

The receptacle forming the removable head externally has a step in the base occupying approximately half of said base and is laterally limited by diametrically opposite walls. The step is occupied by the flap, the pivot shaft thereof being assembled between opposing holes made in the two diametrically opposite walls limiting said step.

The anchoring means for anchoring the receptacle to the tubular foot consist of outer ribs radially projecting from the wall of the receptacle and in opposing openings of the wall of the tubular foot. The openings are slightly longer than the ribs for the purpose of allowing the partial rotation of the receptacle with regard to the tubular foot, about the shaft thereof, with a range of plus minus 15°, thus facilitating its orientation to prevent the user from having to take his or her eyes off the road, increasing the safety in the use of navigation devices.

The means for fixing the anchor piece of the navigator consist of complementary guides of the flap and the anchor piece. These guides can consist of complementary bent flanges running in a direction perpendicular to the pivot shaft of the flap. The flanges of the anchor piece can thus be coupled in the flanges of the flap by sliding the flanges of the anchor piece on the flanges of the flap.

The tubular foot and the receptacle preferably have a cylindrical shape, the foot having after its outer base a part with a larger section in which the receptacle is coupled and in which the windows for the outer ribs of the receptacle are made. At the bottom of the step, the base of the receptacle has an opening for coupling the connector of the navigator.

The support for portable navigators of the invention allows combining the advantages of portable navigators and integrated navigators. Since the navigator can be located in a certain point of the dashboard of the vehicle, bothersome supplementary elements for attaching it to the windshield are done away with, significantly improving the user's visibility. Another factor that is improved with the support of the invention is the appearance since regardless of the navigator used a degree of integration can be achieved that does not affect the conventional appearance of the interior of the vehicle. The use of the support of the invention further allows eliminating the wires used to supply power to the navigator once the battery has run out since the wire assembly is preinstalled inside the support and is suitable for any type of navigator.

### Brief Description of the Drawings

The attached drawings show an embodiment, the description of which may aid in better understanding the features and advantages of the support of the invention.

In the drawings:
Figure 1 is a perspective view of a support formed according to the invention, with the pivoting flap in the operative position.
Figure 2 is a view similar to that of Figure 1, with the pivoting flap in the collapsed position.
Figure 3 is a front perspective view of the anchor piece of the navigator.
Figure 4 is a rear perspective view of the same anchor piece.
Figure 5 is a perspective view of the removable head of the navigator, with the pivoting flap collapsed.
Figure 6 is a perspective view similar to that of Figure 5, with the pivoting flap in the operative position.
Figure 7 is a perspective view similar to those of Figures 5 and 6, with the pivoting flap removed.
Figure 8 is a cross section of the head of the support, taken according to section line VIII-VIII of Figure 6.
Figure 9 is a perspective view of the assembly, showing the coupling system between the anchor piece of the navigator and the pivoting flap.
Figure 10 is a partial perspective view of the assembly, which shows the anchoring means between the removable head and the tubular foot.

### Detailed Description of an Embodiment

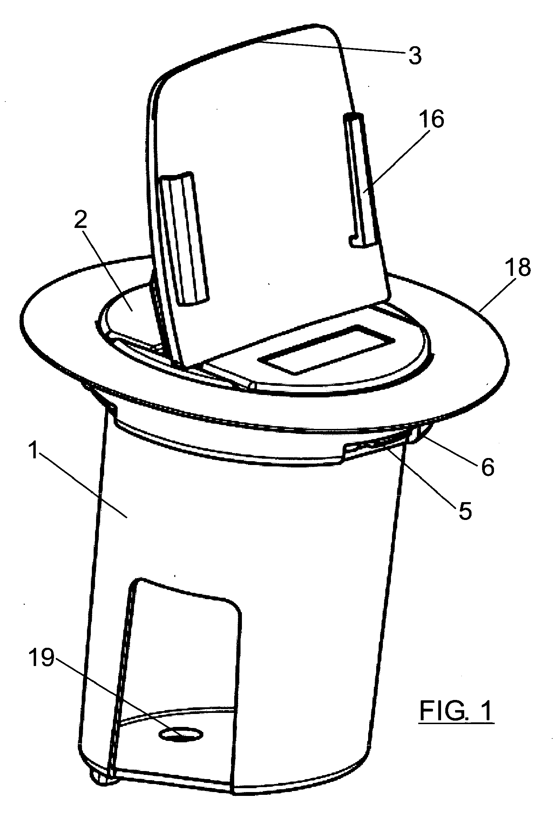

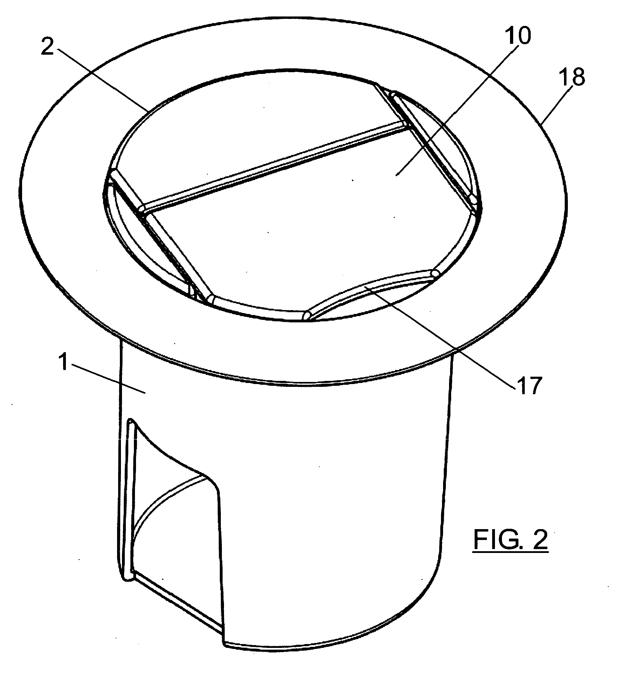

Figures 1 and 2 show perspective views of the assembly of the support of the invention, which is formed by a tubular foot, with reference number 1, a removable head, with reference number 2, and an anchor piece 3 for the navigator.

In the embodiment depicted in the drawings, the tubular body 1 and the removable head 2 have a circular outline.

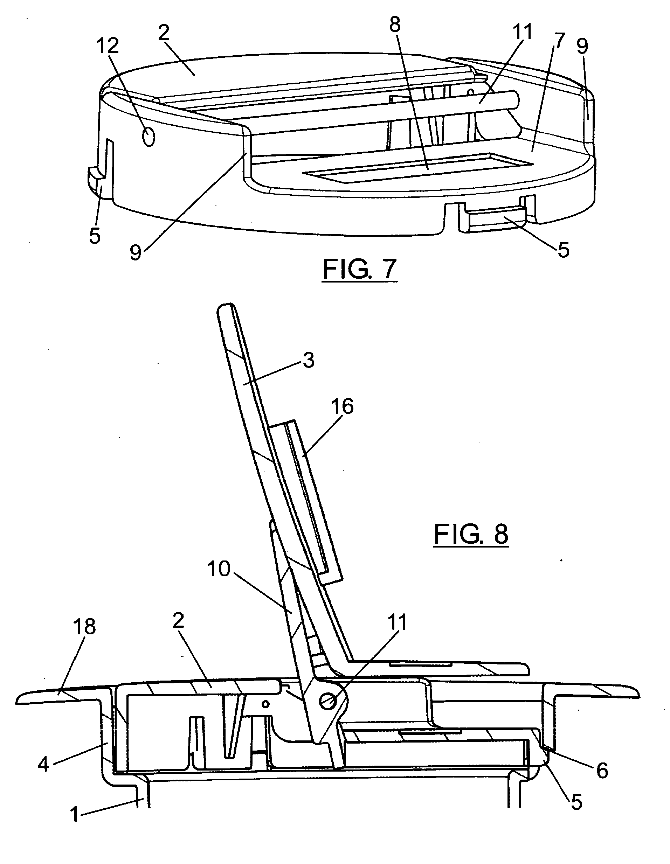

As can be seen in Figure 8, the tubular body 1 has in the outer base a flaring forming a part 4 with a larger section in which the removable head 2 is assembled.

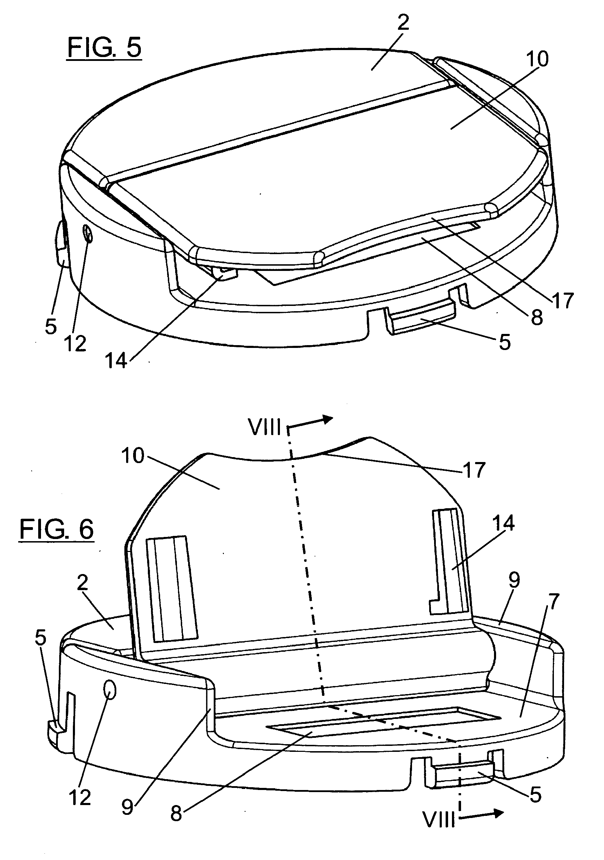

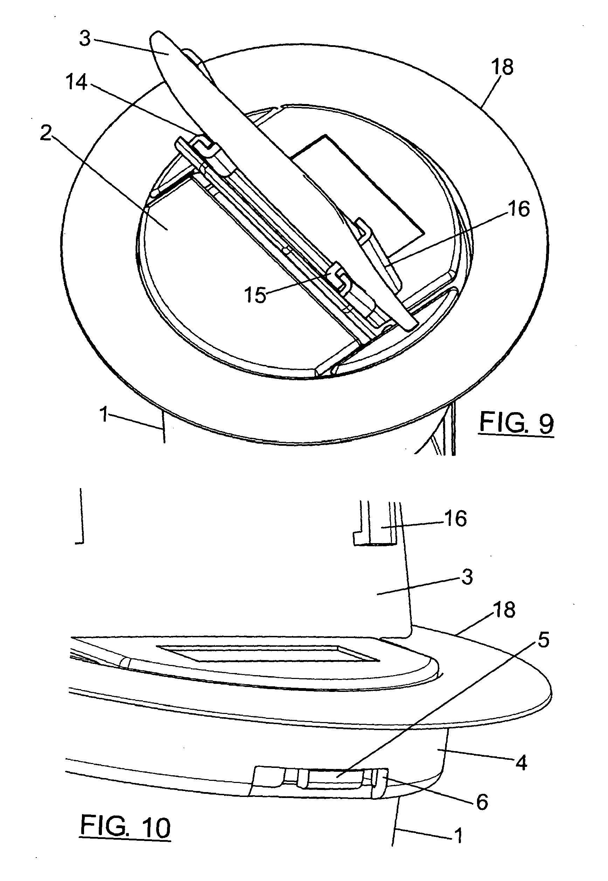

This head consists of a receptacle which is assembled in the part 4 with a larger section of the tubular foot 1 in the inverted position, both components having anchoring means consisting of ribs 5, Figures 6, 7 and 10, radially projecting from the wall of the receptacle, and in opposing openings 6, Figure 10, of the wall of the part 4 of the tubular foot. The openings 6 are slightly longer than the ribs 5 for the purpose of allowing the partial rotation of the head 2 with regard to the tubular foot 1 on the shaft of said foot. This possibility of rotation of the head 2 allows orienting the navigator so as to help the user to view it.

As indicated, the removable head 2 is formed by a receptacle that is assembled in the inverted position in the part of the tubular foot 1 with the largest diameter, the bottom of this receptacle externally having a step occupying approximately half of this base and which bottom 7, Figures 6 and 7, has an opening 8 for coupling the connector of the navigator. The mentioned step is laterally limited by walls 9 between which a pivoting flap 10 is arranged by means of a rotation shaft 11 assembled between opposing holes 12 made in the walls 9.

The pivoting flap 10 can swing between a collapsed position, shown in Figures 2 and 5, in which it is in an approximately coplanar position with the base of the receptacle 2, and an operative position, shown in Figures 1, 6 and 8, in which it forms an angle with said base that is slightly greater than 90°. The back of the flap 10 bears means for fixing the anchor piece 3, which means can consist of guides formed by bent flanges 14 running in the direction perpendicular to the pivot shaft 11 of said flap.

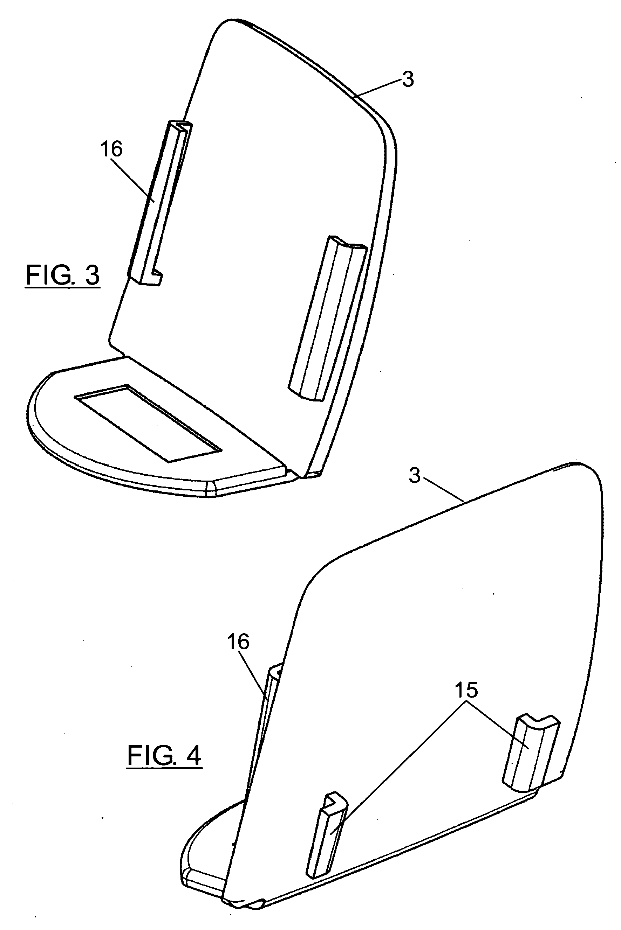

The anchor piece 3 of the navigator, shown in Figures 3 and 4, is L-shaped, with an angle that is slightly greater than 90°. The back of the tilted panel has guides in the form of bent flanges 15 which are complementary with the flanges 14 of the pivoting flap 10 and they are coupled together by sliding one over the other, adopting the position shown in Figure 9. On the front face, the tilted panel of this piece also has guides 16 for fixing the navigator.

The support 3 may vary, depending on the navigator model used, the general shape and back guides for the fixing thereof to the guides 14 of the pivoting flap 10 being maintained.

As can be seen in Figures 2 and 5, the pivoting flap 10 has after the free edge, opposite the position occupied by its hinge pin, a notch 17 which aids in introducing a finger for the operation of lifting said flap from its collapsed position.

The upper part 4 of the tubular foot 1 with the largest diameter ends in a peripheral flange 18, which will aid in its supporting or resting on the area limited by the opening made in the dashboard in which the tubular foot is fixed, which can be locked by means of a conventional clamping system.

In order to allow the correct integration of the navigator in the support of the invention, eliminating the bothersome power supply wires, a DC-DC electricity transformer system using the current of the actual vehicle to supply power to the navigator device can be arranged. This transformer must be adapted to the conditions of the navigator, since the power supply these devices require does not exceed 5 volts, and the power supply coming from the automobile exceeds 12 volts in some cases. This is a standard device and is placed inside the tubular foot 1 of the support, being connected at one end to the vehicle power supply through a hole 19, Figure 1 die cut in the bottom of the tubular foot 1, and at the other end to the integrated circuit board located under the base of the receptacle forming the removable head 2 and controlling the correct operation of the portable navigation system.

## Claims

1. A universal support for the assembly of GPS navigators in automobiles, **characterized in that** it comprises a tubular foot (1) intended to be coupled in an opening die cut in the dashboard of the automobile, and a removable head (2) which is coupled in the upper base of the tubular foot and bears means for fixing an anchor piece (3) of the navigator in the operative position; which head (2) consists of a receptacle that is provided with anchoring means for anchoring to the tubular foot, with partial freedom of rotation about the shaft of said foot, and it incorporates a pivoting flap (10), which pivots according to a shaft (11) perpendicular to that of said receptacle, on which it can pivot between a collapsed position, in which it is in a coplanar position with the base of said receptacle, and an operative position, in which it forms an angle with said base that is slightly greater than 90°, the back of said flap bearing means for fixing the anchor piece of the navigator.

2. The support according to claim 1, **characterized in that** the fixed receptacle is assembled in the tubular foot (1) in the inverted position and externally has a step in the base occupying approximately half of said base, and is laterally limited by diametrically opposite walls (9), said step being occupied by the flap (10), the pivot shaft (11) of which is assembled between opposing holes (12) made in the diametrically opposite walls (9).

3. The support according to claim 1, **characterized in that** the anchoring means for anchoring the receptacle to the tubular foot consist of outer ribs (5) radially projecting from the wall of the receptacle and opposing openings (6) of the wall of the tubular foot, said openings being longer than the ribs so as to allow the partial rotation of the receptacle with regard to the tubular foot.

4. The support according to claim 1, **characterized in that the** means for fixing the anchor piece of the navigator consist of complementary guides of the flap (10) and said anchor piece (3) and they can be coupled by sliding the guides of said anchor piece on the guides of the flap.

5. The support according to claim 4, **characterized in that** the mentioned guides consist of complementary bent flanges (14 and 15) running in a direction perpendicular to the pivot shaft of the flap.

6. The support according to claim 1, **characterized in that** the flap (10) has after the free edge, opposite to the position occupied by the pivot shaft, a notch (17) to facilitate the lifting of said flap.

7. The support according to claim 1, **characterized in that** the tubular foot (1) and the removable head (2) have a cylindrical shape, said foot having after its outer base a part (4) with a larger section, ending in a peripheral flange (18) in which the receptacle is coupled and in which the windows (6) for the outer ribs (5) of the receptacle are made.

8. The support according to claim 2, **characterized in that** at the bottom (7) of the step, the base of the receptacle has a recess or opening (8) for coupling the connector of the navigator.
